# EUROPÄISCHE PATENTANMELDUNG

(11) **EP 4 686 853 A1**
(43) Veröffentlichungstag der Anmeldung: **04.02.2026**
(21) Anmeldenummer: 25192925.3
(22) Anmeldetag: 30.07.2025
(51) Int. Cl.: F16D 3/10

(54) **GELENKWELLE**

(30) Priorität: 02.08.2024 DE 102024122136
(71) Anmelder: Isar Getriebetechnik GmbH & Co. KG, 85737 Ismaning (DE)
(72) Erfinder: Wimmer, Albert, 85737 Ismaning (DE); Pletzer, Tobias, 80939 München (DE); Hamer, Markus, 81549 München (DE)
(74) Vertreter: Winter, Brandl - Partnerschaft mbB

(57) **Zusammenfassung**

Die vorliegende Erfindung schafft eine Gelenkwelle mit einem Wellenelement (4) sowie einem mittels eines Drehgelenks (2, 4C, 6) relativ zu dem Wellenelement (4) verschwenkbaren Koppelelement (2). Das Drehgelenk weist mehrere in Umfangsrichtung verteilte Wälzkörper (6) auf, die unter rotationsfester formschlüssiger Koppelung des Wellenelements (4) mit dem Koppelelement (2) sowohl in ersten Ausnehmungen (4C) des Wellenelementes (4) als auch in zweiten Ausnehmungen des Koppelelementes (2) derart eingreifen, dass das Wellenelement gegenüber dem Koppelelement neigbar ist und das Wellenelement und das Koppelelement im Wesentlichen drehfest miteinander verbunden sind. Erfindungsgemäß weist das Wellenelement (4) einen mit den ersten Ausnehmungen (4C) unmittelbar ausgestatteten Flansch (4A) auf. Dieser Flansch (4A) weist ferner mehrere in Umfangsrichtung verteilte Fenster (4B) auf, innerhalb derer jeweils ein zum weiteren Verbinden des Koppelelementes (2) bestimmtes Befestigungselement (3) hindurchragt.

## Beschreibung

### Technisches Gebiet

Die vorliegende Offenbarung betrifft eine Gelenkwelle, insbesondere eine Ausgleichswelle, die für hohe Drehzahlen geeignet ist. Daher wird auch von einer "High-Speed"-Gelenkwelle gesprochen.

Ausgleichswellen dienen dazu, einen Versatz zwischen zwei sich drehenden Wellen auszugleichen. Der Versatz kann dabei radial oder in der Winkellage oder in einer Kombination auftreten. In einer Ausgleichswelle sind typischerweise zwei Gelenke verbaut, da ein Gelenk alleine lediglich einen Winkelversatz ausgleichen kann. Um auch einen Radialversatz ausgleichen zu können, sind zwei Wellengelenke erforderlich (also eine Gelenkwelle mit zwei Gelenken). Ein gängiges Einsatzbeispiel für Ausgleichswellen sind Gelenkwellen in Fahrzeugachsen.

Ein Beispiel für eine Ausgleichskupplung für derartige Wellen findet sich in der DE 1 154 680 A. Diese Druckschrift schlägt eine Ausgleichskupplung vor, in der Käfige zur Führung von Wälzkörpern zwischen je einer Welle und einem Zwischenstück angeordnet sind, und die Bewegung der Käfige durch Anschläge begrenzt wird.

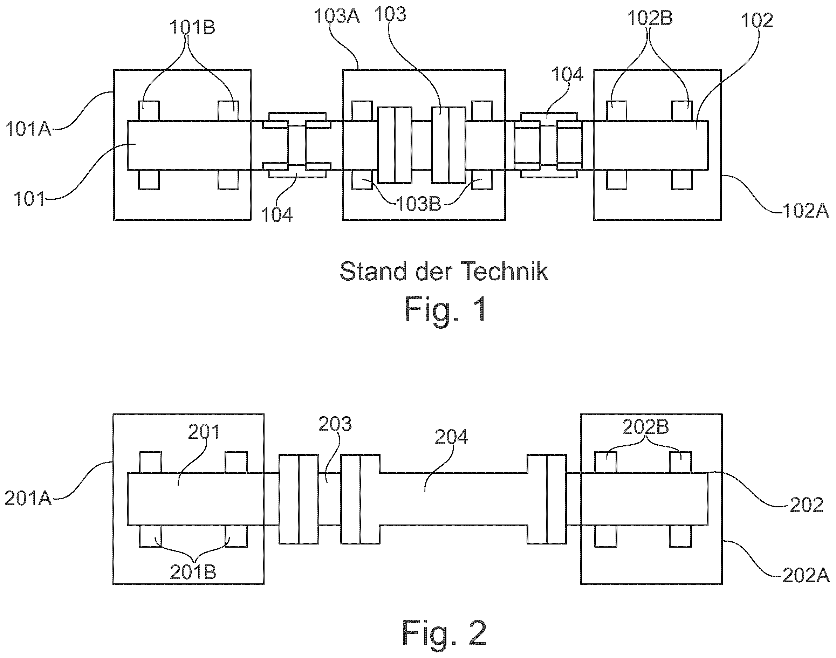

Die Anmelderin baut Getriebe für Hochdrehzahl-Anwendungen, insbesondere für den Entwicklungs- und Testbereich. Dabei wird in der Mehrzahl der Einsatzfälle an einer schnell laufenden Welle (High-Speed-Welle) Messtechnik angebracht, um Drehmoment und Leistung zu messen oder zu überwachen. Dafür gibt es im Wesentlichen zwei mögliche Aufbauten, die in den beiliegenden Figuren 1 und 2 schematisch als Stand der Technik wiedergegeben sind. Entweder (Fig. 1) ist eine Messeinheit 103 zwischen Antrieb 101 und Prüfling 102 über zwei Kupplungen/Gelenkwellen 104 mit je dem Antrieb 101 und Prüfling 102 verbunden, oder (Fig. 2) Messflansch 203 und Prüfling 202 sind über eine Kupplung oder Gelenkwelle 204 verbunden, und der Messflansch ist direkt mit dem Antrieb gekoppelt. Weil die Kupplung/Gelenkwelle 204 nicht gesondert gelagert wird, entfällt neben dieser Lagerung eine Kupplung/Gelenkwelle. Dadurch wird der Aufbau einfacher und aufgrund der wegfallenden Lagerstelle auch genauer. Allerdings ist der einfachere Aufbau nach Fig. 2 jedoch auf Grund der meist erheblichen Masse von Messflansch 203 und Gelenkwelle 204 begrenzt in der Höhe der Drehzahlen, weil ansonsten die überhängenden Massen rotordynamisch Eigenfrequenzen im Betriebsbereich erzeugen. Daher sind dabei insbesondere für hohe Drehzahlen zwei Aspekte von Bedeutung: Die Gelenkwelle sollte ein möglichst geringes Gewicht aufweisen und die Massenschwerpunkte der Gelenkwelle sollten möglichst nahe an den Anbindungspunkten (und damit an den nächstliegenden Lagerstellen) liegen.

Um möglichst hohe Drehzahlen erreichen zu können, ist demnach sowohl die Absolutmasse (um weniger Beschleunigungsenergie zu benötigen) als auch vor allem die Massenverteilung (Verhinderung von Unwuchten und Biegeeigenfrequenzen) der Gelenkwelle, insbesondere ihrer Anschlüsse an Messflansch und Prüfling von großer Bedeutung.

Daher ist es eine Aufgabe der Erfindung, eine Gelenkwelle zu schaffen, bei der das Gesamtgewicht reduziert und die Gewichtsverteilung für hohe Drehzahlen optimiert ist. Insbesondere ist das Ziel, die Massenschwerpunkte möglichst nahe an die Lagerstellen zu legen.

Dieses Ziel wird erfindungsgemäß durch eine extrem schlanke Gestaltung von Gelenken der Gelenkwelle und eine Konstruktion der Befestigung der Gelenkwelle an den Anschraubflächen erreicht, die die Massenschwerpunkte nahe an die Lagerstellen legt.

Insbesondere bietet die vorliegende Erfindung eine Gelenkwelle mit einem Wellenelement sowie einem mittels eines Drehgelenks relativ zu dem Wellenelement verschwenkbaren Koppelelement. Das Drehgelenk weist mehrere in Umfangsrichtung verteilte Wälzkörper auf. Die Wälzkörper greifen unter rotationsfester formschlüssiger Koppelung des Wellenelementes mit dem Koppelelement sowohl in ersten Ausnehmungen des Wellenelementes als auch in zweiten Ausnehmungen des Koppelelementes ein. Erfindungsgemäß weist das Wellenelement einen mit den ersten Ausnehmungen unmittelbar ausgestatteten Flansch auf. Dieser Flansch weist ferner mehrere in Umfangsrichtung verteilte Fenster auf, innerhalb derer jeweils ein zum weiteren Verbinden des Koppelelementes bestimmtes Befestigungselement hindurchragt.

Wälzkörper, Wellenelement und Koppelelement liegen dabei näherungsweise in einer Ebene, deren Normale in der Axialrichtung der Gelenkwelle verläuft. Dadurch kann das Wellenelement gegen das Koppelelement (geringfügig) verkippen, während beide auf den Wälzkörpern abwälzen. Die Befestigung des Wellengelenks erfolgt Im Gegensatz zum bisherigen Stand der Technik durch das bewegliche Gelenkteil des Wellengelenks hindurch, statt wie im Stand der Technik die Verschraubung außen an der Nabe und damit außerhalb des Wellengelenks vorzusehen. Dadurch lässt sich der Durchmesser des Wälzkreises (auf dem die Wälzkörper angeordnet sind) größer ausführen als der Verschraubungsdurchmesser. Dieser größere Wälzkreis ergibt eine größere Lagerstabilität und folglich eine höhere mögliche Drehzahl. Außerdem wirken sich Massenungleichheiten der weiter innen, also näher bei der Drehachse, liegenden Befestigungen weniger auf mögliche Unwuchten aus, da der Abstand von der Drehachse gering bleibt. Derartige Massenungleichheiten sind aufgrund von Fertigungstoleranzen und dergleichen nie vollständig zu vermeiden.

Vorzugsweise ist das Befestigungselement ein Schraubenelement, wobei das Schraubenelement weiter vorzugsweise aus einem Leichtmetall, hochfestem Stahl oder aus faserverstärktem Kunststoff, gefertigt ist. Grundsätzlich kann die Befestigung auch auf andere Weise erfolgen, beispielsweise über Verriegelungen wie Clips und dergleichen, oder theoretisch auch kraftschlüssig, beispielsweise durch Magnetkräfte, Reibungskräfte (wobei eine Normalkraft durch ein Verspannen aufgebracht werden könnte, wie es auch beim Verschrauben geschieht) oder durch Adhäsion/ Kohäsion (Verklebung), Verschweißen, Vernieten, Verlöten oder dergleichen. Allerdings sind die letzteren Verfahren, die eine nicht zerstörungsfrei lösbare Verbindung schaffen, insbesondere für wechselnde Testaufbauten ungeeignet, und Reibungs-und Magnetkräfte sind kaum in der Lage, die bei hohen Drehzahlen auftretenden Gegenkräfte abzufangen. Bei Clips werden aufwändige Sonderkonstruktionen erforderlich, die im Einsatz kaum Vorteile bringen dürften, ein versehentliches Lösen im Betrieb könnte zu Unwuchten und eventuell sogar zu Verletzungsgefahren durch weggeschleuderte Teile führen. Verschraubungen sind dagegen bewährte, günstige und lösbare Verbindungen mit hinreichender Festigkeit und werden daher im vorliegenden Fall bevorzugt.

Weiter vorzugsweise erfolgt die Verschraubung über Buchsen durch den Wellenflansch hindurch. Durch eine derartige Maßnahme kann der Wellenflansch dünner bzw. flacher und damit masseärmer ausgeführt werden, zudem kann der Massenschwerpunkt des Aufbaus näher an das Nabenteil gebracht werden. Dadurch können Schwingungen weiter verringert werden. Außerdem können die Buchsen ein Spiel zwischen Wellenelement und Koppelelement gewährleisten, da sie nicht an beiden anliegen müssen. Diese Buchsen sind weiter vorzugsweise aus Stahl, Leichtmetall oder faserverstärktem Kunststoff gefertigt. Werden die Buchsen aus Leichtmetall, beispielsweise Aluminium oder Titan, oder aus Kunststoff, insbesondere faserverstärktem Kunststoff, gefertigt, reduziert sich die Gesamtmasse weiter im Vergleich zu Buchsen, die aus Stahl hergestellt werden. Dadurch können auch die Rotationsträgheit und eventuelle Unwuchten des Aufbaus weiter verringert werden.

Die vorstehend erläuterten Wälzkörper sind vorzugsweise Wälzkugeln. Auf Wälzkugeln gelagert können die Bauteile des Wellengelenks gut einen Winkelversatz des Aufbaus ausgleichen. Zudem sind Wälzkugeln günstig und in praktisch beliebigen Abmessungen verfügbar, so dass dieser bevorzugte Aufbau auch gut skalierbar ist.

Weiter vorzugsweise werden Wellenelement und Koppelelement über einen den Flansch des Wellenelements umgreifenden Niederhalter verbunden, der mittels weiterer Befestigungsmittel am Koppelelement fixiert ist. Bevorzugt ist in diesem Fall der Niederhalter mittels Schrauben als Befestigungsmitteln am Koppelelement fixiert und über Buchsen abgestützt.

In einer besonders bevorzugten Ausführungsform ist die Gelenkwelle als Gleichlaufgelenkwelle ausgestaltet. Dadurch wird eine Drehbewegung gleichförmig übertragen und somit werden keine Drehschwingungen durch die Gelenkwelle erzeugt. Kurzbeschreibung der Figuren
Fig. 1 ist eine Darstellung zur Veranschaulichung eines Systemaufbaus nach einem ersten Stand der Technik;
Fig. 2 ist eine Darstellung zur Veranschaulichung eines Systemaufbaus nach einem zweiten Stand der Technik, der der vorliegenden Erfindung zugrunde liegt;
Fig. 3 zeigt ein erfindungsgemäßes Wellengelenk in isometrischer Schnittansicht;
Fig. 4 zeigt eine Ausführungsform der Erfindung in einer Explosionsansicht;
Fig. 5 zeigt ein zusammengebautes erfindungsgemäßes Wellenteil in einer Schnittansicht; und
Fig. 6 zeigt das Verhalten des erfindungsgemäßen Wellengelenks unter Drehmomenteinleitung, und

### Beschreibung der Ausführungsbeispiele

Nachstehend werden Ausführungsbeispiele der vorliegenden Offenbarung auf der Basis der zugehörigen Figuren beschrieben.

In Figur 1 wird ein (herkömmlicher) Testaufbau auf einem Prüfstand schematisch gezeigt. Der Antrieb 101 ist in einem Gehäuse 101A über Lager 101B gelagert, ihm gegenüber ist ein Prüfling 102 ebenfalls in einem Gehäuse 102A über Lager 102B gelagert. Eine Messeinheit 103 ist zwischen Prüfling 102 und Antrieb 101 in einem Gehäuse oder einem Rahmen 103A über Lager 103B gelagert. Sowohl zwischen Antrieb 101 und Messeinheit 103 als auch zwischen Messeinheit 103 und Prüfling 102 sind Kupplungen 104 vorgesehen, die eine (weitgehend) drehfeste Verbindung zwischen den jeweiligen Teilen bei gleichzeitigem Winkel- und gegebenenfalls auch Längenausgleich ermöglichen. "Weitgehend" drehfest bedeutet, dass auch ein geringes (Dreh-)Spiel beispielsweise bei einer Umkehr der Antriebsrichtung möglich sein kann.

Figur 2 zeigt einen schematischen Testaufbau einer Gelenkwelle mit einem Wellenelement 204, bei der keine zusätzlichen Lagerstellen für die Messeinheit benötigt werden. Prinzipiell ist ein solcher Aufbau auch mit einer herkömmlichen Gelenkwelle möglich, leidet dann aber an den vorstehend für den Stand der Technik erläuterten Problemen. Im Einzelnen umfasst der Aufbau einen Antrieb 201 mit Lagern 201B in einem Gehäuse 201A, einen Prüfling 202 mit Lagern 202B in einem Gehäuse 202A, die Wellenelement 204 und einen direkt zwischen Wellenelement 204 und Antrieb 201 angebrachten Messflansch 203. Durch den Aufbau nach Fig. 2 können im Vergleich zum Aufbau nach Fig. 1 der Rahmen 103A und die zugehörigen Lager 103B eingespart werden. Durch die festen Verbindungen zwischen Antrieb 201 und Messflansch 203, zwischen Messflansch 203 und Wellenelement 204 sowie zwischen Wellenelement 204 und Prüfling 202 ist eine stabilere Kraftübertragung als mittels der Kupplungen 104 möglich, weshalb der Messflansch 203 und das Wellenelement 204 nicht gesondert gelagert werden müssen. Dieses Fehlen der Lager analog zu den Lagern 103B trägt auch zu einer Verringerung der zu beschleunigenden Massen und möglicher Unwuchten bei den gewünschten hohen Drehzahlen bei.

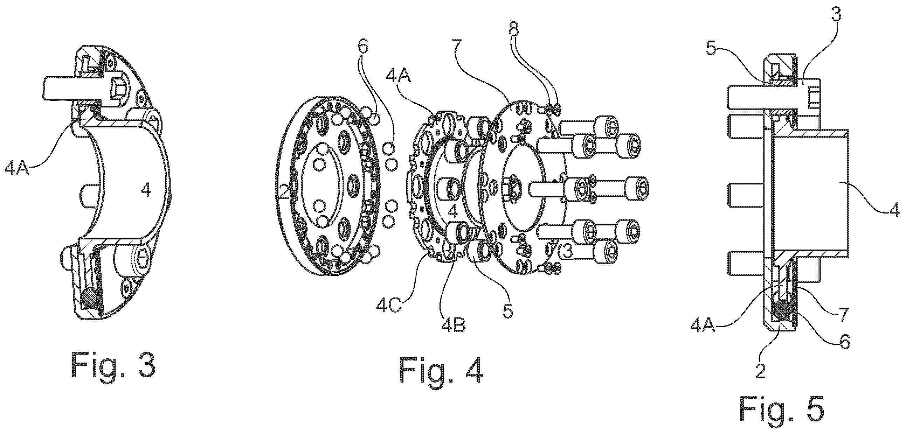

Wie vorstehend erläutert sind bei diesem Aufbau im Stand der Technik dennoch die Drehzahlen aufgrund hoher Massen von Messflansch und Gelenkwelle und dadurch auftretenden Unwuchten bei schneller Drehung begrenzt. Hier setzt die vorliegende Erfindung an, wie in den nachstehend genauer erläuterten Figuren 3 bis 6 gezeigt.

Fig. 3 zeigt schematisch einen dreidimensionalen Schnitt durch das erfindungsgemäße Wellengelenk eines Wellenelements 4 an einem (nicht gezeigten) Messflansch.

Fig. 4 zeigt die erfindungsgemäße Konstruktion des Wellengelenks in einer Explosionsansicht, und Fig. 5 zeigt die zusammengebaute Konstruktion im Schnitt. Die erfindungsgemäße Flanschnabe 2 ist flach ausgeführt Dadurch kann Gewicht eingespart und der Massenschwerpunkt näher an die Anschraubfläche gerückt werden. Im Einzelnen ist der Wellenflansch 4A des Wellenelements 4 mit Durchgangslöchern oder Fenstern 4B versehen, durch die Schrauben 3 als Befestigungselemente in Buchsen 5 geführt sein können. Die Buchsen 5 bieten die notwendige Stabilität, um die Verschraubung im dünner als im Stand der Technik ausgeführten Wellenflansch 4A sicher zu führen. Die Buchsen 5 bestehen vorzugsweise aus Stahl, können unter Umständen aber beispielsweise aus Leichtmetall oder auch aus faserverstärkten Kunststoffen bestehen, um eine weitere Gewichtsreduzierung zu erreichen. In weiteren Aussparungen 4C im Wellenflansch 4A sind Wälzkugeln 6 aufgenommen, die eine vergleichbare Funktion wie die vorstehend erläuterten Kugeln 6 erfüllen. Mit anderen Worten bilden die Wälzkugeln 6 als Wälzkörper mit der Flanschnabe 2 und den Aussparungen 4C, die sich im Wellenflansch 4A des Wellenelements 4 befinden, ein Drehgelenk. Wälzkugeln 6, Flanschnabe 2 und Wellenflansch 4A sind dabei vorzugsweise gegeneinander verspannt, so dass die Konstruktion spielfrei ist. Wird ein Drehmoment durch diese spielfreie Anordnung unmittelbar übertragen, arbeitet die Gelenkwelle als Gleichlaufgelenkwelle. Die Schrauben 3 dienen dazu, die gesamte Konstruktion mit dem (hier nicht gezeigten) Antriebsflansch, beispielsweise des Antriebs 201, zu verschrauben. Ein Niederhalter 7 wird über weitere Schrauben 8, die als Befestigungsmittel wirken, am Nabenteil 2 verschraubt und liegt auf den Buchsen 5 auf. Somit umgreift der Niederhalter 7 den Wellenflansch 4A und verhindert ein Abfallen des Wellenflanschs 4A vom Nabenteil 2. Weil der Wellenflansch 4A aufgrund der Buchsen 5, auf denen der Niederhalter 7 aufliegt, trotz dieser Befestigung noch ein geringes Spiel hat, kann er auf den Wälzkörpern 6 kippen. Dadurch wird die Winkelbeweglichkeit (und bei beidseitigem Aufbau an Antrieb und Prüfling die Gelenkigkeit des Wellenelements) sichergestellt.

Weil auf den Niederhalter 7 während der Prüfung keine starken Kräfte in Axialrichtung des Aufbaus wirken, kann er mit vergleichsweise wenigen, kleinen und leichten Schrauben 8 am dünnen Nabenteil 2 verschraubt sein. Dadurch wird die Masse des Aufbaus im Vergleich zum Stand der Technik insbesondere am Außenumfang weiter verringert.

Der erfindungsgemäße Aufbau ordnet die Befestigungsverschraubung mit den Schrauben 3 innerhalb des Durchmessers an, auf dem die Wälzkugeln 6 laufen. Daher sind die relativ massiven Schrauben 3 näher an der Mittelachse der Welle angeordnet, so dass eventuelle Masseunterschiede zwischen gleichartigen Schrauben durch Fertigungstoleranzen und dergleichen zu geringerer Unwucht als im Stand der Technik führen. Zudem sinkt durch die mögliche dünnere Ausführung der Flansche und den Einsatz der Buchsen 5 auch die Massenträgheit insgesamt. Der Schwerpunkt des Wellengelenks wandert näher an die Nabe und damit die Lagerstelle, so dass eventuell dennoch auftretende Unwuchten auch besser abgefangen werden können. Im Ergebnis ist es daher möglich, eine Gelenkwelle und einen Prüfaufbau für höhere Drehzahlen zu erstellen als mit dem Aufbau, der vorstehend als Stand der Technik erläutert wurde.

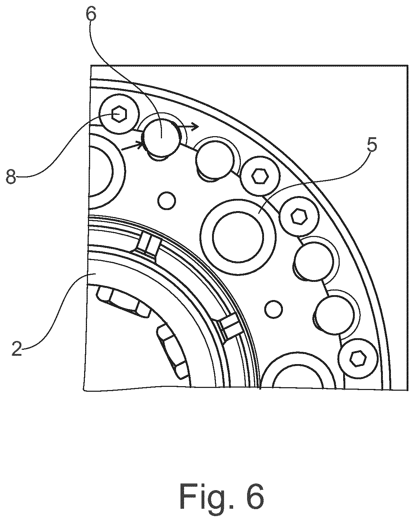

Fig. 6 zeigt das Verhalten des erfindungsgemäßen Wellengelenks unter Drehmomenteinleitung. Wie an den an einem Wälzkörper dargestellten Pfeilen in Fig. 6 erkennbar, wird bei Einleitung eines Drehmoments über den Wellenflansch 4 dieser auf die Wälzkörper 6 gedrückt, die zwischen Wellenflansch 4 und Nabenteil 2 liegen. Wie auch aus der Fig. 6 erkennbar, können diese Wälzkörper 6 spielfrei zwischen Wellenflansch 4 und Nabenteil 2 angeordnet werden. Das über den Wellenflansch 4 eingeleitete Drehmoment wirkt somit über die Wälzkörper 6 in der hier dargelegten Ausführungsform direkt auf das Nabenteil 2. Damit wird das eingeleitete Drehmoment direkt übertragen. Gleichzeitig lässt sich an der gezeigten Buchse 5 verdeutlichen, dass die Buchse 5 sich am Nabenteil 2 abstützt, aber, wie noch deutlicher in Fig. 5 gezeigt, gegenüber dem Wellenflansch 4 ein geringes Spiel aufweist. Zudem ist der Wellenflansch um die Buchse mit einem geringen Spiel ausgestaltet und relativ dünn. Dadurch kann der Wellenflansch 4 relativ zur Buchse 5 kippen, wodurch der Winkelversatz von Wellenflansch 4 und Nabenteil 2 ermöglicht wird. Zudem werden die Massen und damit die Trägheitskräfte des Aufbaus weiter reduziert Gleichzeitig bleibt durch die vorstehend erläuterte Vorspannung der Kraftschluss zwischen Wellenflansch 4 und Nabenteil 2 über die Wälzkörper 6 auch im gekippten Zustand aufrechterhalten. Durch diese Anordnung wird die Masse bei gleicher Stabilität weiter verringert.

Zusammenfassend schafft die Erfindung eine Gelenkwelle mit einem Wellenelement 4 sowie einem mittels eines Drehgelenks relativ zu dem Wellenelement 4 verschwenkbaren Koppelelement 2. Das Drehgelenk umfasst das Koppelelement 2, Ausnehmungen 4C des Wellenelements und mehrere Wälzkörper 6, die in Umfangsrichtung verteilt sind und die unter rotationsfester formschlüssiger Koppelung des Wellenelements 4 mit dem Koppelelement 2 sowohl in ersten Ausnehmungen 4C des Wellenelementes 4 als auch in zweiten Ausnehmungen des Koppelelementes 2 derart eingreifen, dass das Wellenelement 4 gegenüber dem Koppelelement 2 neigbar ist und das Wellenelement 4 und das Koppelelement 2 im Wesentlichen drehfest miteinander verbunden sind. Erfindungsgemäß weist das Wellenelement 4 einen mit den ersten Ausnehmungen 4C unmittelbar ausgestatteten Flansch 4A auf. Dieser Flansch 4A weist ferner mehrere in Umfangsrichtung verteilte Fenster 4B auf, innerhalb derer jeweils ein zum weiteren Verbinden des Koppelelementes 2 bestimmtes Befestigungselement 3 hindurchragt.

## Patentansprüche

1. Gelenkwelle mit einem Wellenelement (4) sowie einem mittels eines Drehgelenks (2, 4C, 6) relativ zu dem Wellenelement (4) verschwenkbaren Koppelelement (2), wobei das Drehgelenk das Koppelelement (2), Ausnehmungen (4C) des Wellenelements (4) und mehrere in Umfangsrichtung verteilte Wälzkörper (6) umfasst, die unter rotationsfester formschlüssiger Koppelung des Wellenelements (4) mit dem Koppelelement (2) sowohl in ersten Ausnehmungen (4C) des Wellenelements (4) als auch in zweiten Ausnehmungen des Koppelelements (2) derart eingreifen, dass das Wellenelement (4) gegenüber dem Koppelelement (2) neigbar ist und das Wellenelement (4) und das Koppelelement (2) drehfest miteinander verbunden sind, **dadurch gekennzeichnet, dass** das Wellenelement (4) einen mit den ersten Ausnehmungen (4C) unmittelbar ausgestatteten Flansch (4A) aufweist, wobei dieser Flansch (4A) ferner mehrere in Umfangsrichtung verteilte Fenster (4B) aufweist, innerhalb derer jeweils ein zum weiteren Verbinden des Koppelelementes (2) bestimmtes Befestigungselement (3) hindurchragt.

2. Gelenkwelle nach Anspruch 1, wobei mindestens ein Befestigungselement (3) eine Schraube (3) ist.

3. Gelenkwelle nach Anspruch 2, wobei die Schraube (3) aus einem Leichtmetall, hochfestem Stahl oder aus Kunststoff, insbesondere faserverstärktem Kunststoff, gefertigt ist.

4. Gelenkwelle nach einem der Ansprüche 1 bis 3, wobei eine Befestigung des Flansches (4A) am Koppelelement über in Buchsen (5) durch den Flansch (4A) hindurch geführte Schrauben (3) erfolgt.

5. Gelenkwelle nach Anspruch 4, wobei die Buchsen (5) aus Leichtmetall, hochfestem Stahl oder Kunststoff, insbesondere faserverstärktem Kunststoff, gefertigt sind.

6. Gelenkwelle nach einem der vorhergehenden Ansprüche, wobei die Wälzkörper (6) Wälzkugeln sind.

7. Gelenkwelle nach einem der vorhergehenden Ansprüche, wobei Wellenelement (4) und Koppelelement (2) über einen den Flansch (4A) des Wellenelements (4) umgreifenden Niederhalter (7) verbunden werden, der mittels weiterer Befestigungsmittel (8) am Koppelelement (2) fixiert ist.

8. Gelenkwelle nach Anspruch 7, wobei der Niederhalter (7) mittels Schrauben (8) am Koppelelement (2) fixiert und über Buchsen (5) abgestützt ist.

9. Gelenkwelle nach einem der vorhergehenden Ansprüche, wobei die Gelenkwelle (1) als Gleichlaufgelenkwelle ausgestaltet ist.

10. Gelenkwelle nach einem der vorhergehenden Ansprüche, wobei die rotationsfeste formschlüssiger Koppelung des Wellenelements (4) mit dem Koppelelement (2) über die Wälzkörper (6) durch eine Vorspannung erzeugt wird, die das Koppelelement (2) über die Wälzkörper (6) gegen das Wellenelement (4) verspannt.
